# EUROPEAN PATENT SPECIFICATION

(11) **EP 3 960 415 B1**
(45) Date of publication and mention of the grant of the patent: **07.06.2023**
(21) Application number: 21193433.6
(22) Date of filing: 27.08.2021
(51) Int. Cl.: B29C 45/06, B29C 45/16

(54) **METHOD FOR PRODUCING A WATER GUARD FOR VEHICLE DOORS AND PRODUCT THUS OBTAINED**
VERFAHREN ZUR HERSTELLUNG EINES WASSERSCHUTZES FÜR FAHRZEUGTÜREN UND SO HERGESTELLTES PRODUKT
PROCEDE DE FABRICATION D'UNE PROTECTION CONTRE L'EAU POUR PORTES DE VEHICULES ET PRODUIT AINSI OBTENU

(30) Priority: 01.09.2020 IT 202000020779
(43) Date of publication of application: 02.03.2022
(73) Proprietor: Sapa S.P.A., 20144 Milano (MI) (IT)
(72) Inventor: AFFINITA, Antonio, NAPOLI(NA) (IT)
(74) Representative: Fiammenghi, Eva

(56) References cited:
- WO-A1-2012/153234
- DE-A1-102018 007 862

## Description

### Technical field

The present invention relates to the field of vehicle components and the moulds and production methods thereof. More generally, the present invention relates to the automotive industry.

### Prior art

The automotive industry, for decades now, is constantly in pursuit of technical performance and comfort almost perfect for the user, whether a driver or a passenger.

As a matter fact, over the years every component forming a car has been enriched with technical and aesthetic details, it has been completed with electronic instruments, sensors, alarms and it has become the object of profound innovations that have led to the vehicles we know today.

Actually, it is no wonder that a Smart - that is one of the smallest cars on the market that can accommodate only two people - looks huge and disproportionate with respect to an old "Fiat 500" or "Mini". The cars of the past, seen with modern eyes, seem like small-scale reproductions of modern-day cars. Yet even those cars used to carry passengers and luggage which, over the years, have not changed their average size.

So why are today's cars so much bulkier than they used to be, while retaining their original usefulness, that is transportation of people and things by road?

The answer precisely lies in the ever-increasing pursuit of passenger comfort; an endeavour that has hit all visible parts of a vehicle also including the parts seen by the mechanics alone like a wave.

Let us now examine the door alone: in the past it only consisted of a metal sheet with an external handle for opening, an internal locking system that used to be activated manually and a crank for raising and lowering the window manually.

The comfort of modern-day doors is evident: the door locks are centralised and can be activated using a button; the windows are electric; inside there is an ergonomic projection that acts as an armrest; inside a lateral storage compartment is present; there are thermal insulation layers; materials suitable for sound isolation are provided for; there are sensors that indicate that the door is not closed..., and so on and so forth.

So, given that it is rotatable, it is clear that the door is the only element which has the face designed to be located inside the cockpit which, when the door is open, is found outside, and therefore in contact with atmospheric agents and, possibly, with rain. The same slot that exists between the body of the vehicle roof and the edge of the door is subject to infiltration of water, especially in case of heavy rain.

Obviously, anti-infiltration technology on vehicle doors has also been the subject of extensive research and technological progress over the years.

The element which prevents water from falling into the vehicle is called, in technical jargon, "water guard". Until about 10 years ago, it used to consist of a two-sided adhesive polyurethane foam which used to be extruded by a special machine.

The modern technologies have replaced foam with a plastic element that is mechanically coupled with the electric window system and that carries, perimetrically, an injection of two-component polyurethane (polyol - isocyanate) which, by polymerising, takes the form of a cord so as to act as a gasket and to prevent the filtering of water.

The production of this element therefore, to date, provides for at least two production steps: first the production of the plastic element and subsequently the polyurethane cord.

There do not seem to be any optimised solutions on the market which allow the production of the plastic profile already provided with an anti-infiltration perimeter directly downstream of the moulding.

DE102018007862 claims a frame for the realization of a window of a motor vehicle which comprises a rigid support profile, at least one elastic profile connected to the support profile by injection moulding and one fixed on a visible side.

WO2012/153234 claims a profile section moulded by the multi-injection moulding of thermoplastic materials having different hardnesses, and forming a seal or a moulding for the body of a motor vehicle, as well as to a method for manufacturing a profile section characterised in that materials are overmoulded: (i) either on coating(s) or on film(s), which is/are tightly bonded, in a continuous manner, to at least one of the visible edge surfaces; (ii) or on said coating(s) and on said film(s), which are optionally tightly bonded, in a continuous manner, to at least one of the sealing edge surfaces and to at least one of the visible edge surfaces.

The object of the present invention is therefore to provide an innovative water guard both in the product, thanks to the use of convenient materials, and innovative in the production process, that is obtained by means of a single co-moulding process.

### Description of the invention

According to the present invention, a method is provided for producing a water guard for vehicle doors and product thus obtained, which effectively resolves the problems outlined above.

Advantageously, the production of the water guard of the present invention can be carried out using existing moulds; in particular double moulds (or in any case provided with a plurality of cavities-interspaces) of the rotary table type or with transfer.

In particular, the method for producing the water guard according to the invention comprises the steps of:
- moulding of the plastic element in a first cavity of the double mould wherein the first cavity has the exact shape of the plastic element;
- transferring the plastic element - solidified by now - to a second cavity which has the shape of the complete water guard; of said double mould. The transfer, depending on the type of mould used, is carried out by a mechanical arm or by the rotation of the rotary table of the mould;
- injecting a predetermined amount of a thermoplastic elastomer of the TPE or silicone rubber type, at the empty portion of said second cavity of said double mould, the remaining cavity portion being filled with said plastic element;
- waiting for the time of solidification of the silicone rubber or of the thermoplastic elastomer which will form the gasket of the water guard and removal of the complete water guard.

In the present invention, a mould is advantageously used that is provided with movable devices suitable to define a plurality of holes at the coupling portion between said plastic element and said gasket. The holes are suitable to be subsequently filled with silicone rubber or thermoplastic elastomeric material, such as TPE, in order to form nail heads which establish a mechanical constraint between the rigid plastic element and elastomeric gasket. Advantageously, the method may comprise a step for coupling a mechanical support element suitable to support said gasket at the lower part.

The shape of the interspaces of the mould which forms the water guard of the present invention provides for the standard shape of the plastic element, while the shape of the gasket has, at a free edge, a comb-like profile provided with a plurality of teeth suitable to drain water and humidity.

In other embodiments, the gasket may have a U-shaped or circular profile.

The advantages offered by the present invention are apparent in the light of the description set forth herein and will be further clarified by the accompanying figures and the detailed description thereof.

### Description of the figures

The invention will be described hereinafter in at least a preferred embodiment by way of non-limiting example and with the aid of the attached figures, wherein:
- FIGURE 1 shows an example of the water guard 10 according to an embodiment in which the gasket 2 is comb-like.
- FIGURE 2 illustrates the two steps of producing the water guard 10 with the rotary table mould technique for obtaining the nail head 3 in the gasket 2.
- FIGURE 3 shows a further embodiment of the water guard 10 in which the gasket 2 is U-shaped and a mechanical support element 5 is present at the lower part.

### Detailed description of the invention

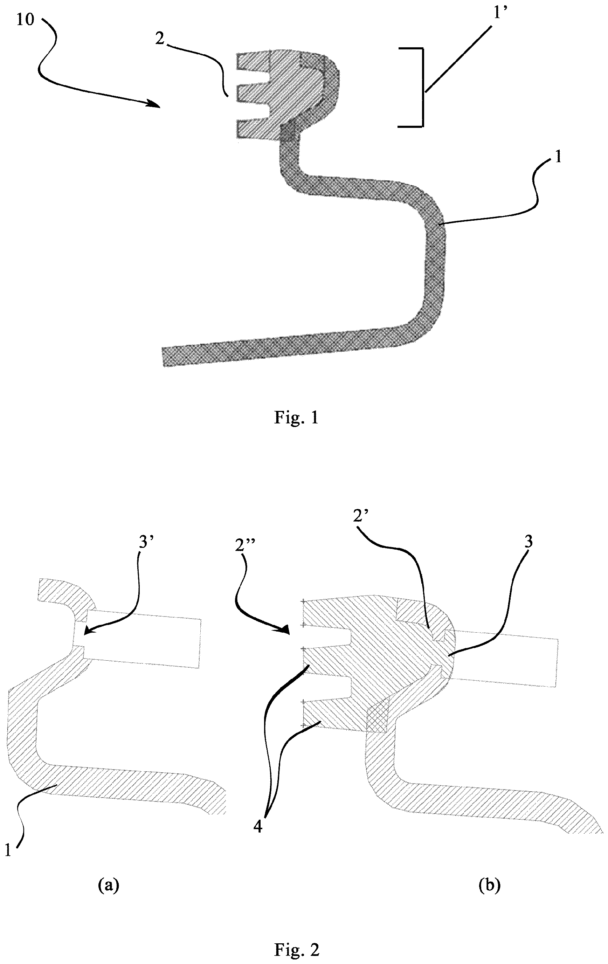

The present invention will now be illustrated by way of non-limiting or binding example, using the figures which illustrate some embodiments in relation to the present inventive concept. With reference to FIG. 1 the water guard 10 of the present invention in its preferred embodiment is shown. It comprises a plastic element 1 and a gasket 2 which adheres to a coupling profile 2' arranged at an upper portion 1' of the plastic element 1.

The gasket 2 is obtained by means of a mould injection process, made of thermoplastic elastomer (such as TPE) or silicone rubber. It has a coupling edge 2' with the upper portion of the plastic element 1, while the free edge 2" is comb-shaped, provided with a plurality of teeth 4 suitable to drain water and moisture.

In this case the adhesion between the plastic element 1 and the gasket 2 is purely chemical. In order to increase the constraints between the two components of the water guard 10 - at the coupling edge 2' - a plurality of nail heads 3 for the mechanical coupling between the plastic element 1 and the gasket 2 is present.

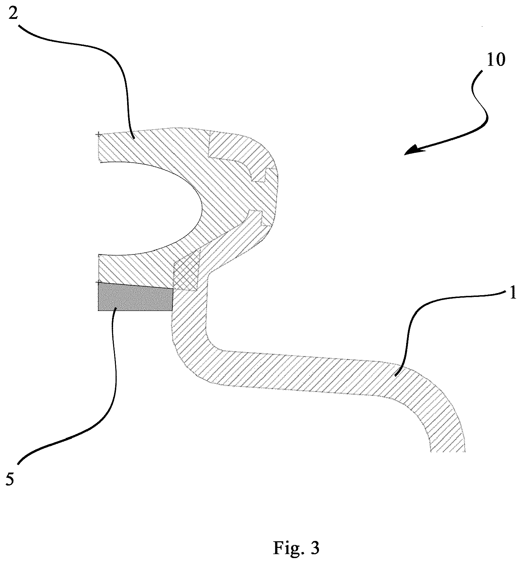

Lastly, Fig. 3 shows an element which adds stability to the gasket 2, i.e., a mechanical support 5 suitable to support said gasket 2 at the lower part and coupled to said plastic element 1. Lastly, it is clear that modifications, additions or variations which are obvious to a person skilled in the art may be applied to the invention described heretofore without departing from the scope of protection provided by the attached claims.

## Claims

1. Method for producing a water guard (10) for vehicle doors, suitable to produce a water guard (10) comprising a plastic element (1) and a gasket (2) which adheres to a coupling profile (2') arranged at an upper portion (1') of said plastic element (1); said method being **characterised in that** it occurs in a double mould having a first cavity and a second cavity and **in that** it comprises the steps of:
- moulding said plastic element (1) in a first cavity of said double mould; said first cavity having the shape of said plastic element (1); during said moulding of said plastic element (1), the mould is provided with movable devices suitable to define a plurality of holes (3') at the coupling portion (2') between said plastic element (1) and said gasket (2); said holes (3') being suitable to be subsequently filled with said silicone rubber or said thermoplastic elastomer in order to form nail heads (3) which establish a mechanical constraint between the plastic element (1) and the gasket (2);
- transferring said plastic element (1), by now solidified, to said second cavity of said double mould; said transfer being carried out by a mechanical arm; said second cavity having the shape of said complete water guard (10);
- injecting a predetermined amount of silicone rubber or of a thermoplastic elastomer, such as TPE, at the empty portion of said second cavity of said double mould, the remaining cavity portion being filled with said plastic element (1);
- waiting for the time of solidification of said silicone rubber or said thermoplastic elastomer which will form said gasket (2) and removal of the complete water guard (10).

2. Method for producing a water guard (10) for vehicle doors, according to the preceding claim 1, **characterised in that** it occurs in a mould with rotary table.

3. Method for producing a water guard (10) for vehicle doors, according to any one of the preceding claims, **characterised in that** it comprises a coupling pitch of a mechanical support element (5) suitable to support said gasket (2) at the lower part.

4. Water guard (10) produced according to one of previous claims for vehicle doors, comprising a plastic element (1) and a gasket (2) which adheres to a coupling profile (2') arranged at an upper portion (1') of said plastic element (1); said water guard (10) being **characterised in that** said gasket (2) is made of silicone rubber or of a thermoplastic elastomer (TPE); said gasket (2) has, at the edge (2') for coupling with said plastic element (1), a plurality of nail heads (3) for the mechanical coupling with said plastic element (1).

5. Water guard (10) for vehicle doors, according to the preceding claim 4, **characterised in that** said gasket (2) has, at a free edge (2"), a comb-like profile provided with a plurality of teeth (4) suitable to drain water and moisture.

6. Water guard (10) for vehicle doors, according to any one of the preceding claims 4 to 5, **characterised in that** said gasket (2) has a U-shaped profile at a free edge (2").

7. Water guard (10) for vehicle doors, according to any one of the preceding claims 4 to 5, **characterised in that** said gasket (2) has a circular profile at a free edge (2").

8. Water guard (10) for vehicle doors, according to any one of the preceding claims 4 to 7, **characterised in that** it comprises a mechanical support element (5) suitable to support said gasket (2) at the lower part and coupled to said plastic element (1).

## Patentansprüche

1. Verfahren zum Herstellen eines Wasserschutzes (10) für Fahrzeugtüren, das geeignet ist, einen Wasserschutz (10) herzustellen, der ein Kunststoffelement (1) und eine Dichtung (2) aufweist, die an einem Kopplungsprofil (2') haftet, das an einem oberen Teil (1') des Kunststoffelements (1) angeordnet ist; wobei das Verfahren **dadurch gekennzeichnet ist, dass** es in einer Doppelform mit einem ersten Hohlraum und einem zweiten Hohlraum stattfindet und dass es die folgenden Schritte aufweist:
- Formen des Kunststoffelements (1) in einem ersten Hohlraum der Doppelform; wobei der erste Hohlraum die Form des Kunststoffelements (1) besitzt; während des Formens des Kunststoffelements (1) ist die Form mit beweglichen Vorrichtungen versehen, die geeignet sind, eine Mehrzahl von Löchern (3') an dem Kopplungsteil (2') zwischen dem Kunststoffelement (1) und der Dichtung (2) zu definieren; wobei die Löcher (3') geeignet sind, um nachfolgend mit dem Silikonkautschuk oder dem thermoplastischen Elastomer gefüllt zu werden, um Nagelköpfe (3) zu bilden, die eine mechanische Verbindung zwischen dem Kunststoffelement (1) und der Dichtung (2) herstellen;
- Überführen des inzwischen verfestigten Kunststoffelements (1) in den zweiten Hohlraum der Doppelform; wobei die Überführung durch einen mechanischen Arm ausgeführt wird; wobei der zweite Hohlraum die Form des vollständigen Wasserschutzes (10) aufweist;
- Einspritzen einer vorgegebenen Menge von Silikonkautschuk oder von einem thermoplastischen Elastomer wie etwa TPE in den leeren Teil des zweiten Hohlraums der Doppelform, wobei der verbleibende Hohlraumteil mit dem Kunststoffelement (1) gefüllt wird;
- Abwarten des Zeitpunkts der Verfestigung des Silikonkautschuks oder des thermoplastischen Elastomers, der/das die Dichtung (2) bilden wird, und Entnehmen des vollständigen Wasserschutzes (10).

2. Verfahren zum Herstellen eines Wasserschutzes (10) für Fahrzeugtüren nach dem vorhergehenden Anspruch 1, **dadurch gekennzeichnet, dass** es in einer Form mit Drehtisch erfolgt.

3. Verfahren zum Herstellen eines Wasserschutzes (10) für Fahrzeugtüren nach einem der vorhergehenden Ansprüche, **dadurch gekennzeichnet, dass** es einen Kopplungsabstand eines mechanischen Trägerelements (5) aufweist, das geeignet ist, die Dichtung (2) an dem unteren Teil zu tragen.

4. Wasserschutz (10) für Fahrzeugtüren, hergestellt nach einem der vorhergehenden Ansprüche, der ein Kunststoffelement (1) und eine Dichtung (2) aufweist, die an einem Verbindungsprofil (2') haftet, das an einem oberen Teil (1') des Kunststoffelements (1) angeordnet ist; wobei der Wasserschutz (10) **dadurch gekennzeichnet ist, dass** die Dichtung (2) aus Silikonkautschuk oder aus einem thermoplastischen Elastomer (TPE) besteht; die Dichtung (2) besitzt an der Kante (2') zum Koppeln mit dem Kunststoffelement (1) mehrere Nagelköpfe (3) zum mechanischen Koppeln mit dem Kunststoffelement (1).

5. Wasserschutz (10) für Fahrzeugtüren nach dem vorhergehenden Anspruch 4, **dadurch gekennzeichnet, dass** die Dichtung (2) an einer freien Kante (2") ein kammartiges Profil aufweist, das mit einer Mehrzahl von Zähnen (4) versehen ist, die geeignet sind, Wasser und Feuchtigkeit abzuleiten.

6. Wasserschutz (10) für Fahrzeugtüren nach einem der vorhergehenden Ansprüche 4 bis 5, **dadurch gekennzeichnet, dass** die Dichtung (2) an einer freien Kante (2") ein U-förmiges Profil besitzt.

7. Wasserschutz (10) für Fahrzeugtüren nach einem der vorhergehenden Ansprüche 4 bis 5, **dadurch gekennzeichnet, dass** die Dichtung (2) ein ringförmiges Profil an einer freien Kante (2") aufweist.

8. Wasserschutz (10) für Fahrzeugtüren nach einem der vorhergehenden Ansprüche 4 bis 7, **dadurch gekennzeichnet, dass** er ein mechanisches Trägerelement (5) aufweist, das geeignet ist, die Dichtung (2) an dem unteren Teil zu tragen und mit dem Kunststoffelement (1) gekoppelt ist.

## Revendications

1. Procédé de fabrication d'une protection contre l'eau (10) pour portes de véhicules, adapté pour fabriquer une protection contre l'eau (10) comprenant un élément en plastique (1) et un joint d'étanchéité (2) qui adhère à un profil d'accouplement (2') agencé au niveau d'une partie supérieure (1') dudit élément en plastique (1) ; ledit procédé étant **caractérisé en ce qu'**il est mis en œuvre dans un moule double ayant une première cavité et une deuxième cavité et **en ce qu'**il comprend les étapes de :
- moulage dudit élément en plastique (1) dans une première cavité dudit moule double ; ladite première cavité ayant la forme dudit élément en plastique (1) ; pendant ledit moulage dudit élément en plastique (1), le moule est pourvu de dispositifs mobiles adaptés pour définir une pluralité de trous (3') au niveau de la partie d'accouplement (2') entre ledit élément en plastique (1) et ledit joint d'étanchéité (2) ; lesdits trous (3') étant propres à être ensuite remplis dudit caoutchouc de silicone ou dudit élastomère thermoplastique afin de former des têtes de clous (3) qui établissent une contrainte mécanique entre l'élément en plastique (1) et le joint d'étanchéité (2) ;
- transfert dudit élément en plastique (1), désormais solidifié, vers ladite deuxième cavité dudit moule double ; ledit transfert étant mis en œuvre par un bras mécanique ; ladite deuxième cavité ayant la forme de ladite protection contre l'eau (10) complète ;
- injection d'une quantité prédéterminée de caoutchouc de silicone ou d'un élastomère thermoplastique, tel que du TPE, au niveau de la partie vide de ladite deuxième cavité dudit moule double, la partie de cavité restante étant remplie dudit élément en plastique (1) ;
- attente du moment de solidification dudit caoutchouc de silicone ou dudit élastomère thermoplastique qui formera ledit joint d'étanchéité (2) et le retrait de la protection contre l'eau (10) complète.

2. Procédé de fabrication d'une protection contre l'eau (10) pour portes de véhicules, selon la revendication 1 précédente, **caractérisé en ce qu'**il est mis en œuvre dans un moule à table rotative.

3. Procédé de fabrication d'une protection contre l'eau (10) pour portes de véhicules, selon l'une des revendications précédentes, **caractérisé en ce qu'**il comprend un pas d'accouplement d'un élément de support mécanique (5) adapté pour supporter ledit joint d'étanchéité (2) au niveau de la partie inférieure.

4. Protection contre l'eau (10) pour portes de véhicules fabriquée selon l'une des revendications précédentes , comprenant un élément en plastique (1) et un joint d'étanchéité (2) qui adhère à un profil d'accouplement (2') agencé au niveau d'une partie supérieure (1') dudit élément en plastique (1) ; ladite protection contre l'eau (10) étant **caractérisée en ce que** ledit joint d'étanchéité (2) est constitué de caoutchouc de silicone ou d'un élastomère thermoplastique (TPE) ; ledit joint d'étanchéité (2) présente, au niveau du bord (2') pour accoupler ledit élément en plastique (1), une pluralité de têtes de clous (3) pour l'accouplement mécanique avec ledit élément en plastique (1).

5. Protection contre l'eau (10) pour portes de véhicules, selon la revendication 4 précédente, **caractérisée en ce que** ledit joint d'étanchéité (2) présente, au niveau d'un bord libre (2"), un profil en forme de peigne pourvu d'une pluralité de dents (4) propres à évacuer l'eau et l'humidité.

6. Protection contre l'eau (10) pour portes de véhicules, selon l'une des revendications 4 à 5 précédentes, **caractérisée en ce que** ledit joint d'étanchéité (2) présente un profil en forme de U au niveau d'un bord libre (2").

7. Protection contre l'eau (10) pour portes de véhicules, selon l'une des revendications 4 à 5 précédentes, **caractérisée en ce que** ledit joint d'étanchéité (2) présente un profil circulaire au niveau d'un bord libre (2").

8. Protection contre l'eau (10) pour portes de véhicules, selon l'une des revendications 4 à 7 précédentes, **caractérisée en ce qu'**elle comprend un élément de support mécanique (5) adapté pour supporter ledit joint d'étanchéité (2) au niveau de la partie inférieure et accouplé audit élément en plastique (1).
